## Europäisches Patentamt

## European Patent Office

## Office européen des brevets

(19)

(11) Veröffentlichungsnummer: **0 011 884**
**B1**

(12) **EUROPÄISCHE PATENTSCHRIFT**

(45) Veröffentlichungstag der Patentschrift: **03.11.82** ·

(51) Int. Cl.³: **B 62 D 53/00**

(21) Anmeldenummer: **79200566.2**

(22) Anmeldetag: **05.10.79**

(54) Lenkvorrichtung für die Nachläuferachse eines Gelenkomnibusses.

(30) Priorität: **16.11.78 BE 2057413**

(43) Veröffentlichungstag der Anmeldung:
**11.06.80 Patentblatt 80/12**

(45) Bekanntmachung des Hinweises auf die Patenterteilung:
**03.11.82 Patentblatt 82/44**

(84) Benannte Vertragsstaaten:
**AT CH DE FR GB IT NL SE**

(56) Entgegenhaltungen:
**DE - A - 2 456 165**
**DE - B - 1 755 368**
**FR - A - 1 042 459**
**FR - A - 1 455 915**
**US - A - 4 003 447**

(73) Patentinhaber: **Van Hool, naamloze vennootschap**
**Bernard Van Hoolstraat 58**
**B-2578 Lier (BE)**

(72) Erfinder: **Boucquey, Alain Marie Victor Henri**
**Prins Boudewijnlaan 48**
**D-1180 Brussel (BE)**

(74) Vertreter: **Bockstael, Daniel**
**Arenbergstraat 13**
**B-2000 Anvers (BE)**

## Lenkvorrichtung für die Nachläuferachse eines Gelenkomnibusses

Die vorliegende Erfindung bezieht sich auf einen Drehmechanismus für Gliederautobusse, d.h. für Autobusse wobei die mittels eines Drehmechanismus stattfindende Kupplung zwischen den beiden Teilen des Autobusses, d.h. zwischen dem ziehenden Teil einerseits und dem gezogenen Teil anderseits, derart gedacht ist, dass sie zu jeder Zeit sowohl den Reisenden wie auch dem Autobuspersonal freien Durchgang vom einen zum anderen Fahrzeug gewährt, unabhängig von der jeweiligen gegenseitigen Winkellage zwischen denselben.

Es sind bereits zwei verschiedene Typen derartiger Gliederautobusse bekannt, und zwar ein erster Typ, wobei die Welle des gezogenen Fahrzeuges eine sogenannte Starrwelle ist, und ein zweiter Typ, wobei die Räder des gezogenen Fahrzeuges gesteuert werden.

Bekanntlich, einerseits, bieten die Gliederautobussen des ersten bekannten Typs, d.h. die Gliederautobusse deren gezogener Teil mit einer Starrwelle versehen ist, den Nachteil, dass das Fahrzeug in den Kurven eine einen zu kleinen Innenhalbmesser aufweisende Bahn beschreibt und deshalb einen zu grossen Teil der Strassenbreite beansprucht.

Anderseits bietet das zweite bekannte System, wobei das gezogene Fahrzeug mit gesteuerten Rädern ausgestattet ist, den Nachteil, dass das Hinterende desselben beim Verlassen der Haltestellen über dem Gehweg ausschwenkt mit Gefährdung der dort befindlichen Fussgänger o.dgl.

Die vorliegende Erfindung bezieht sich nun auf eine zweckmässige Kombination der beiden vorgenannten Gliederautobustypen, wobei die vorgenannten Nachteile sowohl des einen als des anderen Typs behoben werden.

Zu diesem Zweck ist der erfindungsgemässe Gliederautobus mit einem derart gedachten Drehmechanismus ausgestattet, dass bei kleiner gegenseitiger Winkelversetzung des ziehenden und des gezogenen Fahrzeuges keine Rädersteuerung des letztgenannten stattfindet, infolgedessen die Bewegung des gezogenen Fahrzeuges dieselbe ist als im Fall der Ausrüstung desselben mit einer Starrwelle, während ab einer bestimmten gegenseitigen Winkellage der beiden Fahrzeuge die Räder des gezogenen Fahrzeuges automatisch derart gesteuert werden, dass ab diesem Augenblick das gezogene Fahrzeug wie ein Fahrzeug mit gesteuerten Rädern reagiert.

Der die vorgenannten, sowie weitere Vorteile bietende erfindungsgemässe Drehmechanismus weist die Merkmale des Anspruchs 1 auf. Dabei findet nur ab einer bestimmten gegenseitigen Winkelversetzung der Drehkranzteile Rädersteuerung des gezogenen Fahrzeuges statt.

Die Kennzeichen und Vorteile des erfindungsgemässen Systems treten deutlicher aus der nachfolgenden eingehenden Beschreibung eines bevorzugten Durchführungsbeispiels zutage. Diese ohne jegliche einschränkende Absicht gegebene Beschreibung findet an Hand der beiliegenden Zeichnung statt, wo

die Abbildung 1 eine Seitenansicht des Drehsteuermechanismus gemäss dem vorliegenden Durchführungsbeispiels der Erfindung schematischerweise wiedergibt;

die Abbildung 2 eine Draufsicht des Drehsteuermechanismus gemäss der Abbildung 1 wiedergibt; und die Abbildungen 3 und 4 zwei gemäss den Linien III—III und IV—IV der Abbildung 1 gemachte Schnitte des betreffenden Mechanismus wiedergeben.

Wie aus den beiliegenden Abbildungen ersichtlich ist, sind die beiden Teile des betreffenden Gliederautobusses, d.h. das ziehende Fahrzeug 1 und das gezogene Fahrzeug 2, mittels eines Drehkranzes 3 miteinander verbunden, der bekannterweise aus einem mit dem gezogenen Fahrzeug verbundenen Oberteil 4 und einem an einem Schaukelglied 6 befestigten Unterteil 5 besteht, wobei das ziehende Fahrzeug 1 mittels Stifte 7 und 8 gelenkig mit diesem Schaukelglied 6 verbunden ist zwecks der erforderlichen Ausgleichung der zwischen den beiden Fahrzeugen des Gliederautobusses stattfindenden Vertikalbewegungen um das Steuersystem von denselben unabhängig zu machen.

Erfindungsgemäss ist das vorgenannte Schaukelglied 6 mit zwei Nocken 9 und 10 versehen, womit zwei freidrehend auf einem gemeinschaftlichen Arm 13 montierte Rollen 11 und 12 zusammenwirken. Dieser Arm 13 ist schwenkbar auf einer am Rahmen des gezogenen Fahrzeuges befestigten Welle 14 montiert, die überdies einen gelenkig mit einer Steuerstange 16 verbundenen Hebel 15 trägt. Diese Steuerstange 16 ist bekannterweise mit einem Zwischenarm 17 verbunden, worauf eine zweite Steuerstange 18 montiert ist, die ihrerseits an einem mit einem Spurstangenmechanismus 20 verbundenen Steuerarm 19 gekuppelt ist.

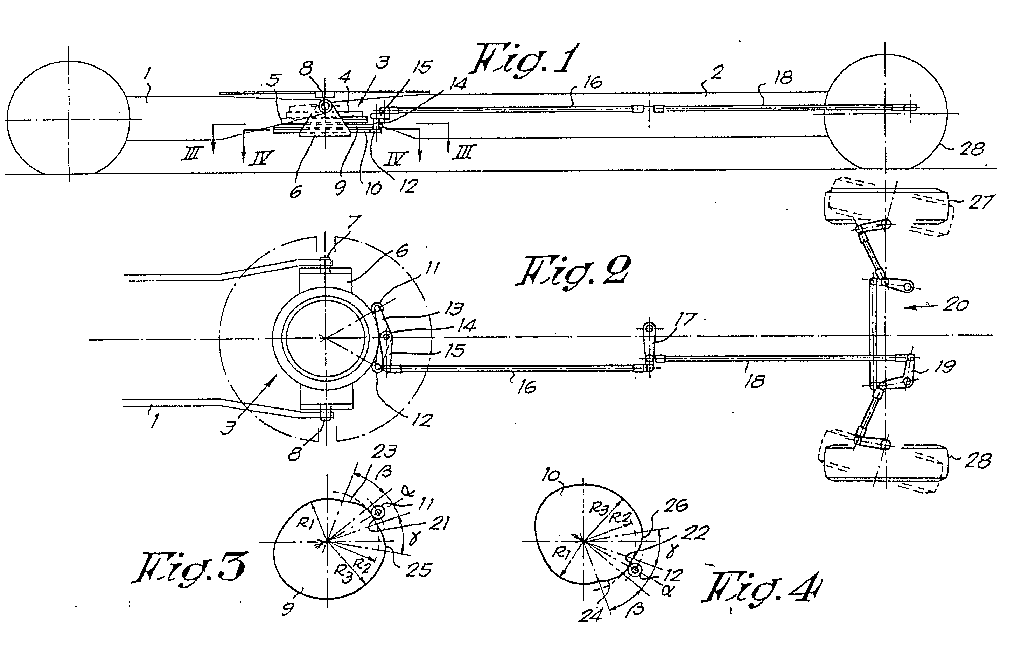

Wie aus den Abbildungen 3 und 4 ersichtlich ist, sind die Profile der Nocken 9 und 10 komplementär, so dass die Rollen 11 und 12, bzw. der Arm 13, stets schubfest gesteuert werden. Beim Schwenken des gezogenen Fahrzeuges in bezug auf das ziehende Fahrzeug um die Vertikalachse des vorgenannten Drehkranzes 33 folgen die Rollen 11 und 12 ja schubfrei der Kurve der betreffenden Nocken 9 und 10.

Jeder der beiden Nocken 9 und 10 hat einen zylinderförmigen Teil, respektive 21 und 22, der konzentrisch mit dem Drehkranz 3 ist, und an der einen Seite dieser Teile 21 und 22 jeweils einen Teil regelmässig abnehmenden Halbmessers, respektive 23 und 24, und an der anderen Seite jeweils einen Teil regelmässig zunehmenden Halbmessers, respektive 25 und 26. Die zylinderförmigen Teile 21 und 22 haben einen Winkel $\alpha$, die Teile 23 und 24 einen Winkel $\beta$ und die Teile 25 und 26 einen Winkel $\gamma$.

Die Halbmesserdifferenz einerseits zwischen R1 und R2 und anderseits zwischen R2 und R3 der vorgenannten Nocken 9 und 10 bestimmt, zusammen mit den geometrischen Kennzeichen der Stangen und Hebel 13—20, die Drehwinkel der Räder 27 und 28 nach rechts und nach links.

Es ist ohne weiteres deutlich, dass, wenn die vorgenannten Rollen 11 und 12 sich auf den zylinderförmigen Teilen 21 und 22 der Nocken 9 und 10 befinden, die Räder 27 und 28 des gezogenen Fahrzeuges nicht gesteuert werden, während, wenn die Rollen 11 und 12 auf den Teilen 23—25 oder 24—25 sitzen, das Schwenken des Armes 13 bzw. des Hebels 15 eine geeignete Winkelverlagerung der vorgenannten Räder 27 und 28 zur Folge hat. Es ergibt sich dadurch, dass beim Verlassen einer Haltestelle das gezogene Fahrzeug wie ein mit einer Starrwelle versehenes Fahrzeug reagiert, während in den Kurven die Räder 27 und 28 gesteuert werden. Ausserdem wird auf diese Weise das Rückfahren dadurch erleichtert, dass das Steuern der betreffenden Räder 27 und 28 nur ab einem bestimmten Drehwinkel $\alpha/2$ des Drehkranzes stattfindet.

Obschon gemäss der in den vorhergehenden Zeilen beschriebenen Durchführungsweise der Erfindung lediglich zwei Nocken 9 und 10 zwecks Gewährung eines kraftschlüssigen Antriebs des Armes 13 vorgesehen sind, kann selbstverständlich auch mit einem einzigen Nocken, beispielsweise mit dem Nocken 9, gewirkt werden, wobei nur eine einzige Rolle 11 auf dem Arm 13 vorgesehen ist und in derartigen Fällen vorzugsweise Mittel vorzusehen sind, deren Aufgabe es ist den Arm 13 bzw. die Rolle 11 ununterbrochen in der richtigen Lage zu halten. Diese Mittel sind z.B. Federn o.dgl., oder bestehen aus einer Rille des Nockens, worin die Rolle 11 läuft.

Auch bei der Durchführungsweise gemäss den Abbildungen 1—4 empfiehlt es sich oft Mittel vorzusehen, deren Aufgabe es ist die Rollen 11 und 12 ununterbrochen die Nocken 9 und 11 zu drücken um eine schubfreie Übertragung zu gewähren.

### Patentansprüche

1. Drehmechanismus für aus einem ziehenden und einem gezogenen Fahrzeug bestehende Gliederautobusse, der im wesentlichen aus einem Drehkranz (3) besteht, dessen Oberteil (4) mit dem gezogenen Fahrzeug (2) verbunden ist und dessen Unterteil (5) auf einem Schaukelglied (6) befestigt ist, an dem das ziehende Fahrzeug schwenkbar um eine waagerechte Welle (14) angelenkt ist, sowie aus am vorgenannten Schaukelglied (6) vorgesehenen Mitteln, welche mittels eines geeigneten Übertragungshebels bzw. Übertragungs Armes mit einer Steuervorrichtung der Räder des gezogenen Fahrzeuges verbunden sind, dadurch gekennzeichnet, dass die vorgenannten Mittel aus wenigstens einem Nocken (9, 10) bestehen, womit eine Folgerolle (11, 12) zusammenwirkt, welche am vorgenannten Übertragungshebel bzw. Übertragungsarm (13) befestigt ist, der seinerseits schwenkbar an einer Welle (14) des gezogenen Fahrzeuges (2) angelenkt ist, wobei diese Welle ausserdem einen mit dem Steuermechanismus verbundenen Hebel (15) trägt, dies alles derart, dass das Steuern der Räder (27, 28) des gezogenen Fahrzeuges (2) nur ab einer bestimmten Relativdrehwinkellage der beiden Drehkranzteile (4, 5) stattfindet.

2. Drehmechanismus gemäss dem Anspruch 1, dadurch gekenzeichnet, dass zwei Nocken (9, 10) vorgesehen sind, wobei jeder Nocken mit einer Folgerolle (11, 12) zusammenwirkt und diese Folgerollen am vorgenannten Arm (13) befestigt sind.

3. Drehmechanismus gemäss dem Anspruch 1 oder 2, dadurch gekennzeichnet, dass der Nocken bzw. die Nocken (9, 10) einen zylinderförmigen Teil (21, 22) aufweisen, der konzentrisch in bezug auf den vorgenannten Drehkranz (3) angeordnet ist, wobei dieser zylinderförmige Teil (21, 22) einerseits durch einen Teil allmählich abnehmenden Halbmessers (23, 24) und anderseits durch einen Teil allmählich zunehmenden Halbmessers (25, 26) verlängert ist.

4. Drehmechanismus gemäss dem Anspruch 3, dadurch gekennzeichnet, dass die vorgenannten Nocken (9, 10) übereinander angeordnet und gemäss Komplementärkurven profiliert sind.

5. Drehmechanismus gemäss irgendeinem der vorhergehenden Ansprüche, dadurch gekennzeichnet, dass, wenn die beiden Fahrzeuge des Gliederautobusses, d.h. das ziehende Fahrzeug (1) und das gezogene Fahrzeug (2), gegenseitig fluchten, die Folgerolle, bzw. die Folgerollen (11, 12) sich genau in der Mitte des zylinderförmigen Teiles (21, 22) des betreffenden Nockens bzw. der betreffenden Nocken (9, 10) befindet bzw. befinden.

6. Drehmechanismus gemäss irgendeinem der vorhergehenden Ansprüche, dadurch gekennzeichnet, dass der vorgenannte, die Folgerolle bzw. die Folgerollen (11, 12) tragende Arm (13) dauernd gegen den Nocken bzw. die Nocken (9,10) herangedrückt wird.

7. Drehmechanismus gemäss irgendeinem der vorhergehenden Ansprüche 1—6, dadurch gekennzeichnet, dass die Folgerolle bzw. die Folgerollen (11, 12) in Rillen des Nockens bzw. der Nocken (9, 10) geführt werden.

## Claims

1. Pivoting mechanism for articulated omnibuses comprising a tractive vehicle and a drawn vehicle, essentially consisting of a turning ring (3), the upper part of which (4) is connected to the drawn vehicle (2) and the lower part (5) of which is fastened to a rocker member (6), articulated to the tractive vehicle through a vertical fulcrum shaft (14), as well as of means, provided on said rocker member (6), connected to the steering mechanism of the drawn vehicle through an adequate connecting lever or arm, featuring that said means consist of at least one cam (9, 10) working in conjunction with a cam roller (11, 12) attached to said connecting lever or arm (13), the latter in turn being articulated to a fulcrum (14) of the drawn vehicle (2), this fulcrum carrying moreover a lever (15) linked to the steering mechanism, all arranged in such a manner that steering of the wheels (27, 28) of the drawn vehicle (2) only occurs when a determined relative angle position is reached between parts (4, 5) of the turning ring (3).

2. Pivoting mechanism according to claim 1, characterized in that two cams (9, 10) are provided, each of them cooperating with a cam roller (11, 12) and these cam rollers being mounted on said arm (13).

3. Pivoting mechanism according to claim 1 or 2, characterized in that the cam, respectively the cams (9, 10) comprise a cylindrical portion (21, 22) arranged concentrically with respect to the said turning ring (3), this cylindrical portion being prolonged at one side into a portion with gradually diminishing radius (23, 24) and at the other side into a portion with gradually increasing radius (25, 26).

4. Pivoting mechanism according to claim 3, characterized in that cams (9, 10) are installed one above the other and are profiled according to complementary curves.

5. Pivoting mechanism according to any one of the preceding claims, characterized in that when the two vehicles comprising the articulated omnibus, i.e. the tractive vehicle (1) and the drawn vehicle (2), are exactly in line with respect to one another, the cam roller, respectively the cam rollers (11, 12) is or are located exactly in the middle of the cylindrical portion (21, 22) of the corresponding cam, respectively of the corresponding cams (9, 10).

6. Pivoting mechanism according to any one of the preceding claims, characterized in that said arm (13) carrying the cam roller, respectively the cam rollers (11, 12) is or are continually pressed against the cam, respectively the cams (9, 10).

7. Pivoting mechanism according to any one of the preceding claims 1 through 6, characterized in that the cam roller, respectively the cam rollers (11, 12) is or are guided in grooves of the cam, respectively the cams (9, 10).

## Revendications

1. Mécanisme pivotant pour autobus articulés comprenant un véhicule tracteur et un véhicule entraîné, consistant essentiellement d'une couronne tournante (3) dont la partie supérieure (4) est reliée au véhicule entraîné (2) et la partie inférieure (5) est attachée sur un membre basculant (6) auquel le véhicule tracteur est articulé par un système pivotant autour d'un axe vertical (14), ainsi que de moyens, prévus audit membre basculant (6), reliés à l'aide d'un levier ou d'un bras adéquat de transmission, à un dispositif de direction des roues du véhicule entraîné, caractérisé en ce que lesdits moyens se composent d'au moins une came (9, 10) avec laquelle coopère un rouleau suiveur (11, 12) monté sur ledit levier ou bras de transmission (13), lui-même pivotant sur un axe (14) du véhicule entraîné (2), cet axe portant en outre un levier (15) relié au mécanisme de direction, le tout disposé en sorte que les roues (27, 28) du véhicule entraîné (2) ne soient dirigées qu'à partir d'une position d'angle relative déterminée des deux parties (4, 5) de la couronne tournante.

2. Mécanisme pivotant suivant la revendication 1, caractérisé en ce que deux cames (9, 10) sont prévues, coopérant chacune avec un rouleau suiveur (11, 12) ces rouleaux suiveurs étant montés sur ledit bras (13).

3. Mécanisme pivotant suivant la revendication 1 ou 2, caractérisé en ce que la came, respectivement les cames (9, 10) présente(nt) une partie cylindrique (21, 22) disposée de manière concentrique par rapport à ladite couronne tournante (3), cette partie cylindrique se prolongeant d'une part en une section d'un rayon graduellement diminuant (23, 24) et d'autre part en une section d'un rayon graduellement croissant (25, 26).

4. Mécanisme pivotant suivant la revendication 3, caractérisé en ce que lesdites cames (9, 10) sont disposées l'une au-dessus de l'autre et sont profilées suivant des courbes complémentaires.

5. Mécanisme pivotant suivant l'une quelconque des revendications précédentes, caractérisé par le fait que lorsque les deux véhicules composant l'autobus articulé, c'est-à-dire le véhicule tracteur (1) et le véhicule entraîné (2), sont bien alignés l'un vis-à-vis de l'autre, le rouleau suiveur, respectivement les rouleaux suiveurs (11, 12) se trouvent exactement au milieu de la partie cylindrique (21, 22) de la came en question, respectivement des cames correspondantes (9, 10).

6. Mécanisme pivotant suivant l'une quelconque des revendications précédentes, caractérisé en ce que ledit bras (13) portant le rouleau suiveur, respectivement les rouleaux suiveurs (11, 12) est continuellement appliqué contre la came, respectivement les cames (9, 10).

7. Mécanisme pivotant suivant l'une quelconque des revendications précédentes 1 à 6, caractérisé en ce que le rouleau suiveur, respectivement les rouleaux suiveurs (11, 12) sont guidés dans des rainures de la came, respectivement des cames (9, 10).

*Fig.1*

*Fig.2*

*Fig.3*

*Fig.4*

0011884